# EUROPÄISCHE PATENTSCHRIFT

(11) **EP 2 040 817 B1**
(45) Veröffentlichungstag und Bekanntmachung des Hinweises auf die Patenterteilung: **02.11.2011**
(21) Anmeldenummer: 07764765.9
(22) Anmeldetag: 21.06.2007
(51) Int. Cl.: B01D 45/16, B08B 15/02, F24C 15/20

(54) **FILTERVORRICHTUNG FÜR DUNSTABZUGSHAUBEN, ABLUFTHAUBEN, UMLUFTHAUBEN ODER DERGLEICHEN**
FILTER DEVICE FOR EXTRACTOR HOODS, VENTILATOR COWLS, RECIRCULATION HOODS OR THE LIKE
DISPOSITIF DE FILTRAGE DESTINÉ À DES HOTTES ASPIRANTES, DES HOTTES D'ÉVACUATION D'AIR, DES HOTTES DE CIRCULATION D'AIR OU ANALOGUES

(30) Priorität: 23.06.2006 DE 102006029303
(43) Veröffentlichungstag der Anmeldung: 01.04.2009
(73) Patentinhaber: Langner, Manfred H., 60318 Frankfurt am Main (DE)
(72) Erfinder: Langner, Manfred H., 60318 Frankfurt am Main (DE)
(74) Vertreter: Katscher Habermann Patentanwälte
(86) Internationale Anmeldenummer: PCT/EP2007/005477
(87) Internationale Veröffentlichungsnummer: WO 2007/147597

(56) Entgegenhaltungen:
- DE-A1- 10 209 735
- DE-U1- 20 221 109
- US-A- 3 021 777
- US-B1- 6 584 968

## Beschreibung

Die Erfindung betrifft eine Filtervorrichtung für Dunstabzugshauben, Ablufthauben, Umlufthaube oder dergleichen mit einem Gehäuse mit einer Eintrittsöffnung und mit einem in die Eintrittsöffnung mündenden, näherungsweise U-förmig verlaufenden Strömungskanal, wobei sich der Querschnitt des Strömungskanals in Strömungsrichtung nach einem Umlenkbereich in einem Verlangsamungsbereich vergrößert und wobei der Strömungskanal von einem Führungselement und von einem umlenkelement begrenzt wird, wobei das Umlenkelement in einem Umlenkbereich um einen Endbereich des Führungselements gekrümmt verläuft und das Führungselement einen abgerundeten, verdickten, dem Umlenkbereich zugewandten Endbereich aufweist.

Aus der Praxis sind verschiedene Filtervorrichtungen für lüftungstechnische Anlagen bekannt, mit welchen Verunreinigungen, Partikel oder Kondensattröpfchen aus einem Luftstrom herausgefiltert werden können. Insbesondere Dunstabzugshauben, die im gewerblichen Bereich eingesetzt werden, erfordern eine möglichst effiziente und mit geringem Wartungsaufwand über einen langen Zeitraum zuverlässig zu betreibende Filtereinrichtung, um die üblicherweise anfallenden erheblichen Kondensat- und Fetttröpfchenmengen zuverlässig aus einem großen Luftvolumen herausfiltern zu können. Die Filterwirkung steht oftmals im Vordergrund und stellt ein maßgebliches Kriterium für die Filtervorrichtung dar. Allerdings werden Filtervorrichtungen zunehmend auch im Rahmen einer Schnell- oder Erlebnisgastronomie in unmittelbarer Kundennähe eingesetzt, so dass auch die unvermeidbare Geräuschentwicklung der Filtervorrichtung im Betrieb sowie deren ästhetische Wirkung eine stetig zunehmende Bedeutung erfahren.

Aktive Filtermaterialien, wie beispielsweise Aktivkohle oder dergleichen, sind oftmals nicht für derartige Filtervorrichtungen geeignet, da die herauszufilternden Kondensat- und Fetttröpfchenmengen ein häufiges Austauschen und kostenintensives Regenerieren des Filtermaterials erfordern. Das Ansammeln größerer Mengen an fetthaltigen Rückständen vermehrt das Risiko einer Brandgefahr, so dass die üblicherweise einzuhaltenden gesetzlichen Bestimmungen für den Brandschutz nur mit einem unverhältnismäßig hohen Konstruktions- und Wartungsaufwand eingehalten werden können.

Es ist bekannt, Filtervorrichtungen mit einem mechanisch wirkenden Filter zu verwenden. Bei den bekannten Prallfiltern wird die Luft durch eine Anordnung von mehreren, vorzugsweise vielen kleinen Umlenkflächen gelenkt. Verunreinigungen wie Partikel oder Kondensattröpfchen schlagen sich an den Umlenkflächen nieder und werden in dem Prallfilter zurückgehalten. Der prallfilter kann überwiegend oder vollständig aus einem nicht brennbaren Material wie beispielsweise Metall hergestellt sein. Um die aus dem Luftstrom abgeschiedenen verunreinigungen aus dem Prallfilter zu entfernen, ist eine manuelle oder automatisch durchgeführte Reinigung in regelmäßigen zeitabständen erforderlich. Mit zunehmender Anzahl der Umlenkflächen kann einerseits die Effizienz des Prallfilters erhöht werden, vergrößert sich jedoch andererseits der für eine Reinigung erforderliche Aufwand erheblich.

Beiden Arten von Filtervorrichtungen ist eine hohe Geräuschentwicklung gemeinsam, da die angesaugte Luft durch ein aktives Filtermaterial oder durch einen Prallabscheider hindurchströmen muss, wobei die Filterwirkung durch eine große Oberfläche des Filtermaterials, bzw. des Prallabscheiders begünstigt und damit einhergehend eine hörbare verwirbelung der angesaugten Luftströmung bedingt werden.

Es sind auch Filtervorrichtungen bekannt, die eine schnelle Ansaugströmung erzeugen und die angesaugte Luftströmung umlenken. In der Luftströmung mitgeführte Verunreinigungen werden auf Grund der im Umlenkbereich wirkenden Fliehkräfte weitgehend in einem Bereich einer Umlenkfläche abgeschieden und dort gesammelt. Eine derartige Filtervorrichtung wird beispielsweise in US 3,021,7776 beschrieben.

Beispielsweise aus DE 102 09 735 A1 oder DE 202 21 109 U1 sind Filtervorrichtungen bekannt, bei der nach einer Umlenkung der angesaugten Luftströmung anschließend die Strömungsgeschwindigkeit vermindert wird, in dem die Querschnittsfläche des in der Filtervorrichtung gebildeten Strömungskanals vergrößert wird. Über den Umlenkbereich hinaus mitgerissene Verunreinigungen fallen dann nach einer deutlichen Verminderung der strömungsgeschwindigkeit in dem Verlangsamungsbereich aus, der sich an den Umlenkbereich anschließt, und können dort ebenfalls zurückgehalten und gesammelt werden. Die Reinigung des Umlenkbereichs bzw, des verlangsamungsbereichs ist oftmals einfacher und schneller durchführbar als die Reinigung eines Prallfilters mit ähnlichem Wirkungsgrad, der üblicherweise eine große Anzahl kleiner Flächenbereiche aufweist. Allerdings müssen der Umlenkbereich und der Verlangsamungsbereich leicht von außen zugänglich sein und durch ihre Formgebung eine möglichst einfache und schnelle Reinigung ermöglichen. Die manuelle Reinigung derartiger Filtervorrichtungen ist dennoch mit einem erheblichen Arbeits- und Zeitaufwand verbunden, während dessen die Dunstabzugshaube, bzw. die Ablufteinrichtung nicht in Betrieb genommen werden kann.

Es sind auch derartige Filtervorrichtungen mit einem Umlenkbereich bekannt, die eine im Inneren der Filtervorrichtung angeordnete Reinigungsvorrichtung aufweisen. Die Reinigungsvorrichtung kann automatisch in vorgebbaren Zeitintervallen oder kontinuierlich betätigbar sein. Üblicherweise wird bei den bekannten Reinigungsvorrichtungen ein flüssiges Reinigungsmittel im Inneren der Filtervorrichtung und insbesondere im Umlenkbereich versprüht, um die dort anhaftenden Verunreinigungen und Kondensatrückstände zu lösen und über einen Sammelsumpf abzuführen.

Zusätzlich zu dem durch die Reinigungsvorrichtung bedingten höheren Konstruktionsaufwand und den Herstellungskosten muss eine Filtervorrichtung mit einer automatisch betätigbaren Reinigungsvorrichtung einer Zuführung von einem flüssigen Reinigungsmittel sowie die Abführung des verbrauchten, mit den gelösten Rückständen verunreinigten Reinigungsmittels aufweisen.

Insbesondere im Übergangsbereich von dem Umlenkbereich zu dem Verlangsamungsbereich wird ebenfalls eine Verwirbelung und turbulente strömung der angesaugten Luftmassen erzeugt, so dass auch solche Filtervorrichtungen eine nicht unerhebliche Geräuschentwicklung während des Betriebs aufweisen.

Aufgabe der vorliegenden Erfindung ist es demzufolge, eine Filtervorrichtung der eingangs genannten Gattung so auszugestalten, dass eine möglichst effiziente Filterwirkung bei einer niedrigen Geräuschentwicklung während des Betriebs gewährleistet wird.

Diese Aufgabe wird erfindungsgemäß dadurch gelöst, dass das Führungselement ein tragflügelartiges Profil aufweist, dessen im Wesentlichen flache Unterseite dem Ansaugbereich zugewandt ist und dessen gewölbte Oberseite dem nach dem Umlenkbereich angeordneten verlangsamungsbereich zugewandt ist und dass der von dem Führungselement und dem Umlenkelement begrenzte Strömungskanal einen in Strömungsrichtung nach einer Ansaugöffnung und vor dem Umlenkbereich angeordneten Ansaugbereich mit einer im Wesentlichen gleich bleibenden Querschnittsfläche aufweist, dessen Länge mindestens das Dreifache, vorzugsweise das Fünffache des kleinsten Durchmessers der Ansaugöffnung beträgt.

Es hat sich gezeigt, dass ein abgerundeter, verdickter Endbereich des Führungselements in mehrfacher Hinsicht günstig ist. Eine kontinuierliche Luftströmung auch im Übergangsbereich zu dem verlangsamungsbereich wird durch den abgerundeten und verdickten Endbereich begünstigt. Eine verminderte Verwirbelung und ein seltenes vollständiges Abreißen der Luftströmung im Verlangsamungsbereich der Filtervorrichtung erhöhen die Wahrscheinlichkeit, dass sich bis dort mitgerissene Verunreinigungen und Kondensattröpfchen absetzen und aus der abgeführten Luftströmung niederschlagen. Auch werden eine durch Turbulenzen und Strömungsabrisse erzeugte Geräuschbildung und damit die Lärmentwicklung der Filtervorrichtung im Betrieb deutlich reduziert. Die Ansaugöffnung ist üblicherweise schlitzartig ausgestaltet und erstreckt sich im Wesentlichen über die gesamte Breite der Dunstabzugshaube. Eine Schlitzbreite von einigen wenigen zentimetern ist für die üblichen Dunstabzugshauben bzw. Ablufthauben zweckmäßig und ausreichend.

Vorzugsweise ist vorgesehen, dass das Verhältnis der Querschnittsfläche des verlangsamungsbereichs relativ zu der Querschnittsfläche des Ansaugbereichs mehr als 3:1, vorzugsweise mehr als 5:1 beträgt. Es hat sich gezeigt, dass eine um mindestens die genannten Faktoren vergrößerte Querschnittsfläche im Verlangsamungsbereich eine üblicherweise ausreichende Erniedrigung der strömungsgeschwindigkeit und ein dadurch bedingtes Ausfallen und Abscheiden des größten Anteils der bis dahin noch mitgerissenen verunreinigungen und Kondensattröpfchen bewirkt.

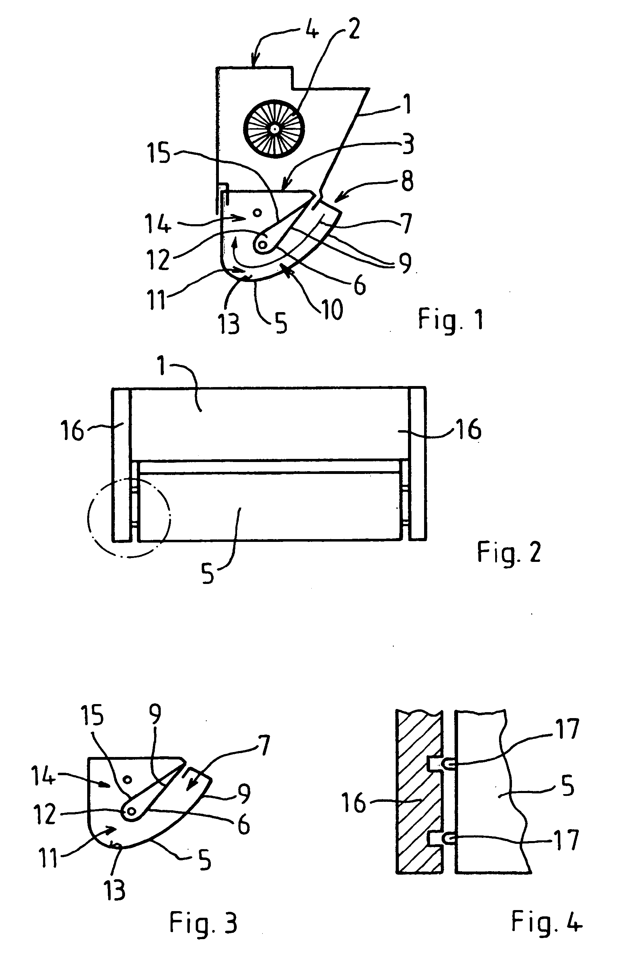

## Patentansprüche

1. Filtervorrichtung für Dunstabzugshauben, Ablufthauben, Umlufthauben oder dergleichen mit einem Gehäuse mit einer Eintrittsöffnung und mit einem in die Eintrittsöffnung mündenden, näherungsweise U-förmig verlaufenden Strömungskanal, wobei sich der Querschnitt des Strömungskanals in Strömungsrichtung nach einem Umlenkbereich in einem Verlangsamungsbereich vergrößert und wobei der Strömungskanal (7) von einem Führungselement (6) und von einem Umlenkelement (5) begrenzt wird, das Umlenkelement (5) in einem Umlenkbereich (11) um einen Endbereich (12) des Führungselements (6) gekrümmt verläuft und das Führungselement (6) einen abgerundeten, verdickten, dem Umlenkbereich (11) zugewandten Endbereich (12) aufweist, **dadurch gekennzeichnet, dass** das Führungselement (6) ein tragflügelartiges Profil aufweist, dessen im Wesentlichen flache Unterseite dem Ansaugbereich (10) zugewandt ist und dessen gewölbte Oberseite dem nach dem Umlenkbereich (11) angeordneten Verlangsamungsbereich (14) zugewandt ist und dass der von dem Führungselement (6) und dem Umlenkelement (5) begrenzte Strömungskanal (7) einen in Strömungsrichtung nach einer Ansaugöffnung (8) und vor dem Umlenkbereich (11) angeordneten Ansaugbereich (10) mit einer im Wesentlichen gleich bleibenden Querschnittsfläche aufweist, dessen Länge mindestens das Dreifache, vorzugsweise das Fünffache des kleinsten Durchmessers der Ansaugöffnung (8) beträgt.

2. Filtervorrichtung nach Anspruch 1, **dadurch gekennzeichnet, dass** das Verhältnis der Querschnittsfläche des verlangsamungsbereichs (14) relativ zu der Querschnittsfläche des Ansaugbereichs (10) mehr als 3:1, vorzugsweise mehr als 5:1 beträgt.

3. Filtervorrichtung nach einem der vorangehenden Ansprüche, **dadurch gekennzeichnet, dass** der Ansaugbereich (10) relativ zur Waagrechten nach unten abfallend, vorzugsweise mehr als 45° und besonders vorzugsweise mehr als 60° relativ zur Waagrechten nach unten abfallend angeordnet ist.

4. Filtervorrichtung nach einem der vorangehenden Ansprüche, **dadurch gekennzeichnet, dass** das Umlenkelement (5) lösbar mit dem Gehäuse (1) verbindbar ist.

5. Filtervorrichtung nach einem der vorangehenden Ansprüche, **dadurch gekennzeichnet, dass** das Führungselement (6) lösbar mit dem Gehäuse (1) und / oder mit dem Umlenkelement (5) verbindbar ist.

6. Filtervorrichtung nach einem der vorangehenden Ansprüche, **dadurch gekennzeichnet, dass** das Umlenkelement (5) und / oder das Führungselement (6) rastend mit dem Gehäuse (1) verbindbar sind.

## Claims

1. Filter arrangement for extractor hoods, ventilator cowls, recirculating hoods or the like, having a housing with an inlet opening and an approximately U-shaped flow channel that opens into the inlet opening, wherein the cross section of the flow channel increases in a deceleration region downstream of a deflection region in the flow direction and wherein the flow channel (7) is delimited by a guide element (6) and a deflecting element (5), the deflecting element (5) runs in a deflection region (11) in a curved manner about an end region (12) of the guide element (6) and the guide element (6) has a rounded, thickened end region (12) facing the deflection region (11), **characterized in that** the guide element (6) has an aerofoil-like profile, the substantially flat underside of which faces the intake region (10) and the arched top side of which faces the deceleration region (14) arranged downstream of the deflection region (11), and **in that** the flow channel (7) delimited by the guide element (6) and the deflection element (5) has an intake region (10) which is arranged in the flow direction downstream of an intake opening (10) and upstream of the deflection region (11) and has a substantially constant cross-sectional area, and the length of which is at least three times, preferably five times, the smallest diameter of the intake opening (8).

2. Filter arrangement according to Claim 1, **characterized in that** the ratio of the cross-sectional area of the deceleration region (14) to the cross-sectional area of the intake region (10) is more than 3:1, preferably more than 5:1.

3. Filter arrangement according to either of the preceding claims, **characterized in that** the intake region (10) is arranged in a downwardly inclined manner in relation to the horizontal, preferably downwardly inclined in relation to the horizontal by more than 45° and particularly preferably by more than 60°.

4. Filter arrangement according to one of the preceding claims, **characterized in that** the deflection element (5) can be connected in a releasable manner to the housing (1).

5. Filter arrangement according to one of the preceding claims, **characterized in that** the guide element (6) can be connected in a releasable manner to the housing (1) and/or to the deflection element (5).

6. Filter arrangement according to one of the preceding claims, **characterized in that** the deflection element (5) and/or the guide element (6) can be connected in a latching manner to the housing (1).

## Revendications

1. Dispositif de filtrage destiné à des hottes aspirantes, des hottes d'évacuation d'air, des hottes de circulation d'air ou analogues, avec une enceinte présentant une ouverture d'entrée et un canal d'écoulement s'étendant approximativement en forme de U et débouchant dans l'ouverture d'entrée, dans lequel la section transversale du canal d'écoulement s'élargit, après une zone de déviation, en une zone de ralentissement et dans lequel le canal d'écoulement (7) est délimité par un élément de guidage (6) et par un élément de déviation (5), l'élément de déviation (5) s'étend en courbe autour d'une zone d'extrémité (12) de l'élément de guidage (6) dans une zone de déviation (11) et l'élément de guidage (6) présente une zone d'extrémité arrondie épaissie (12) tournée ver la zone de déviation (11), **caractérisé en ce que** l'élément de guidage (6) présente un profil d'aile portante, dont la face inférieure essentiellement plate est tournée vers la zone d'aspiration (10) et dont la face supérieure courbe est tournée vers la zone de ralentissement (14) disposée après la zone de déviation (11), et **en ce que** le canal d'écoulement (7) délimité par l'élément de guidage (6) et l'élément de déviation (5) présente une zone d'aspiration (10), disposée dans le sens de l'écoulement après une ouverture d'aspiration (8) et avant la zone de déviation (11), avec une aire de section transversale demeurant essentiellement constante, dont la longueur vaut au moins le triple, de préférence le quintuple, du plus petit diamètre de l'ouverture d'aspiration (8).

2. Dispositif de filtrage selon la revendication 1, **caractérisé en ce que** le rapport entre l'aire de section transversale de la zone de ralentissement (14) et l'aire de section transversale de la zone d'aspiration (10) vaut plus que 3:1, de préférence plus que 5:1.

3. Dispositif de filtrage selon l'une quelconque des revendications précédentes, **caractérisé en ce que** la zone d'aspiration (10) est disposée en pente vers le bas par rapport à l'horizontale, de préférence de plus de 45° et de préférence encore en pente vers le bas de plus de 60° par rapport à l'horizontale.

4. Dispositif de filtrage selon l'une quelconque des revendications précédentes, **caractérisé en ce que** l'élément de déviation (5) peut être assemblé de façon détachable à l'enceinte (1).

5. Dispositif de filtrage selon l'une quelconque des revendications précédentes, **caractérisé en ce que** l'élément de guidage (6) peut être assemblé de façon détachable à l'enceinte (1) et/ou à l'élément de déviation (5).

6. Dispositif de filtrage selon l'une quelconque des revendications précédentes, **caractérisé en ce que** l'élément de déviation (5) et/ou l'élément de guidage (6) peut/peuvent être assemblé(s) à l'enceinte (1) par encliquetage.
